(19) Europäisches Patentamt
European Patent Office
Office européen des brevets

(11) **EP 1 744 153 B1**

(12) **EUROPÄISCHE PATENTSCHRIFT**

(45) Veröffentlichungstag und Bekanntmachung des Hinweises auf die Patenterteilung:
**29.10.2008 Patentblatt 2008/44**

(51) Int Cl.:
***G01N 27/28*** *(2006.01)*

(21) Anmeldenummer: 05106470.7

(22) Anmeldetag: **14.07.2005**

(54) **Signalübertragungsvorrichtung für eine Messsonde sowie Übertragungsverfahren**

Signal transmission device for a measuring probe and method for doing the same.

Système de transmission des signaux d'une sonde de mesure et procédé correspondant

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**17.01.2007 Patentblatt 2007/03**

(73) Patentinhaber: **Mettler-Toledo AG**
**8606 Greifensee (CH)**

(72) Erfinder: **Ammann, Jürgen**
**8004, Zürich (CH)**

(56) Entgegenhaltungen:
**EP-A- 0 153 437       EP-A2- 0 419 769**
**US-A- 3 962 697**

## Beschreibung

Die vorliegende Erfindung betrifft eine Signalübertragungsvorrichtung für eine Messsonde, insbesondere eine elektro-chemische Messsonde, wie eine pH-Messsonde oder eine Sauerstoff-Messsonde, sowie ein Übertragungsverfahren und eine Messsonde nach dem Oberbegriff des Patentanspruchs 1, 8 bzw. 12.

Gemäss [1], U. Tietze, Ch. Schenk, Halbleiterschaltungstechnik, 11. Auflage, 1. Nachdruck, Springer Verlag, Berlin 1999, Kapitel 22, Seiten 1189 und 1190 müssen gemessene elektrische Signale oft erst umgeformt werden, bevor sie beispielsweise einem AD-Wandler in einer Auswerteeinheit zugeführt werden. Gemäss [1] benötigt man zu diesem Zweck Messschaltungen, die ein von einer niederohmigen Spannungsquelle abgegebenes Ausgangssignal liefern. Um die Spannung einer hochohmigen Signalquelle belastungsfrei zu messen, werden vorzugsweise als Impedanzwandler beschaltete Operationsverstärker verwendet. Gemäss [1] ist zu beachten, dass die hochohmige Eingangsleitung sehr empfindlich gegenüber kapazitiven Störeinstreuungen ist.

Gemäss [1], Kapitel 23.4, Seiten 1256-1258, liegen zwischen dem Sensor und dem Ort, an dem die Signale ausgewertet werden, häufig grosse Entfernungen und Umgebungen mit hohen Störpegeln. Der der Verstärkung der gemessenen Signale dienende Verstärker, beispielsweise der in [1], Seite 1189. Abb. 22.1 gezeigte Impedanzwandler, wird daher in unmittelbarer Nähe des Sensors angeordnet.

Gemäss [2], WO 92/21962 werden zur Messung der Wasserstoffionenkonzentration in Flüssigkeiten bzw. zur pH-Messung, beispielsweise für die Überwachung chemischer und biologischer Prozesse in der Lebensmitteltechnik, in zunehmendem Mass Elektrodensysteme, hauptsächlich Glaselektroden, eingesetzt. Der zunehmende Einsatz von Elektroden für die genannten Zwecke führt zu steigenden Anforderungen hinsichtlich der Messgenauigkeit im Langzeiteinsatz. Dabei bedarf es zur Aufrechterhaltung einer befriedigenden Messgenauigkeit einer laufenden Überwachung des Zustandes der verwendeten Elektroden, da beispielsweise eine Beschädigung der ionensensitiven Membran, eine Verschmutzung des Diaphragmas, eine Leitungsunterbrechung und/oder ein Kurzschluss innerhalb der Elektrode zu einer Beeinträchtigung der Messgenauigkeit führen können. Das Bedürfnis, diese Störfaktoren möglichst weitgehend auszuschalten, führte zu einer wachsenden Nachfrage nach Verfahren zur Fehlererkennung, die es gestatten, den Zustand und die Funktion der Glaselektrode ohne Unterbrechung des zu überwachenden Prozesses und insbesondere ohne die Notwendigkeit, die Glaselektrode auszubauen oder aus der Messlösung zu entnehmen, zu überwachen.

Gemäss [2] wird die in ein Messmedium eingetauchte Messsonde, die eine Glaselektrode und eine Referenzelektrode aufweist, hochohmig mit einem in Amplitude und Dauer variablen Rechteckimpuls beaufschlagt, wobei man die durch die Sondenimpedanz veränderte Spannung der Messsonde misst und die erhaltenen Messwerte mit einem experimentell oder rechnerisch ermittelten Sollwert für eine intakte Messsonde vergleicht. Die Rechteckimpulse werden dabei von einem Analogausgang eines Prozessors abgegeben und der Messsonde über eine gesonderte Übertragungsleitung zugeführt.

Bei einem in [3], EP 0 419 769 A2 beschriebenen Verfahren wird die Überwachung mittels symmetrischer bipolarer Stromimpulse durchgeführt, die von einer Steuereinheit abgegeben werden. Die Periodendauer der Stromimpulse ist frei wählbar und kann entsprechend der geforderten Prüfgenauigkeit unterschiedlich eingestellt werden. Dieses Verfahren erfordert einen verhältnismässig grossen Schaltungsaufwand, insbesondere zwei Steuerleitungen, mittels derer, zur Erzeugung der symmetrischen bipolaren Stromimpulse, ein Umschalten von einer positiven Spannungsquelle auf eine negative Spannungsquelle bzw. ein Umschalten von der Messphase, zur Messung des pH-Wertes, auf die Prüfphase, zur Prüfung der Elektroden, durchführbar ist.

Aus [4], EP 0 497 994 A1, ist ein Verfahren zur Prüfung einer pH-Messsonde bekannt, die neben der Glaselektrode und der Referenzelektrode noch eine Hilfselektrode aufweist. Ferner sind zwei Auswerteeinrichtungen vorgesehen, die von einem ersten bzw. einem zweiten Generator mit einer Testwechselspannung versorgt werden. Hierbei arbeitet der erste Generator mit einer um ein geradzahliges Vielfaches höheren Frequenz als der zweite Generator. Dadurch ist eine getrennte Überwachung von Glaselektrode und Referenzelektrode möglich. Überprüft wird im einen Fall der Widerstand der aus Glaselektrode und Hilfselektrode gebildeten Kette, im anderen Fall der aus Referenzelektrode und Hilfselektrode gebildeten Kette. Durch das gewählte Frequenzverhältnis der Generatoren lässt sich eine ausreichend genaue Differenzierung zwischen den Ausgangssignalen in beiden Auswerteeinrichtungen gewinnen, da jeweils ein Ausgangssignal durch die phasenempfindliche Gleichrichtung in der Auswerteschaltung der jeweils anderen Elektrode unterdrückt wird. Die Auswerteeinrichtungen stellen daher nicht mehr direkt die Potentialdifferenz zwischen der Glaselektrode und der Referenzelektrode fest. Sie stellen jedoch eine Potentialdifferenz zwischen der Glaselektrode und der Hilfselektrode beziehungsweise zwischen der Referenzelektrode und der Hilfselektrode fest. Da beide Potentialdifferenzen auf das gleiche Potential der Hilfselektrode bezogen sind, lässt sich die Potentialdifferenz zwischen der Glaselektrode und der Referenzelektrode durch einen Differenzverstärker ermitteln.

Bei dieser Messschaltung sind der Messsonde daher die Testwechselspannungen von zwei verschiedenen Generatoren zuzuführen. Diese Testwechselspannungen werden wiederum zur späteren phasenkohärenten Verarbeitung der Signale verwendet und müssen daher auch über entsprechende Leitungen normalerweise von der Auswerteeinheit zur Messsonde übertragen werden.

Die Verwendung von zusätzlichen Übertragungsleitungen für die Übertragung von Signalen ist jedoch mit einem entsprechenden Aufwand verbunden. Zudem sind bei bereits installierten Anlagen die erforderlichen Leitungen gar nicht vorhanden und kaum oder nur mit sehr hohen Kosten und Betriebsunterbrüchen nachrüstbar. Dies ist auch deshalb von Nachteil weil im Zuge der Miniaturisierung und der somit möglichen dezentralen Anordnung intelligenter Bauteile der Bedarf zur Übertragung zusätzlicher Signale eher steigen wird, weshalb bei bestehenden Anlagen höher entwickelte und dezentral zu installierende Messsonden nur beschränkt einsetzbar sein werden.

Der vorliegenden Erfindung liegt daher die Aufgabe zugrunde, eine verbesserte Signalübertragungsvorrichtung für eine Messsonde sowie ein Übertragungsverfahren und eine Messsonde, insbesondere eine pH-Messsonde oder eine Sauerstoff-Messsonde, für diese Signalübertragungsvorrichtung anzugeben.

Diese Aufgabe wird mit einer Signalübertragungsvorrichtung sowie einem Übertragungsverfahren und einer Messsonde gelöst, welche die in Anspruch 1, 8 bzw. 12 angegebenen Merkmale aufweisen. Vorteilhafte Ausgestaltungen der Erfindung sind in weiteren Ansprüchen angegeben.

Die für eine Messsonde vorgesehene Signalübertragungsvorrichtung weist einen Differenzverstärker auf, dessen nicht-invertierendem Eingang ein von einer Elektrode der Messsonde abgegebenes Eingangssignal zuführbar ist und von dem ein dazu korrespondierendes Ausgangssignal niederohmig an eine Übertragungsleitung abgebbar ist, mittels der das Ausgangssignal zu einer Auswerteinheit übertragbar ist.

Erfindungsgemäss ist der Ausgang des Differenzverstärkers einerseits über einen ersten Widerstand mit der Übertragungsleitung sowie mit dem invertierenden Eingang des Differenzverstärkers und andererseits mit dem Eingang einer ersten Steuereinheit verbunden, mittels der Signale, wie Taktsignale und/oder Daten, erfassbar sind, die von der Auswerteeinheit an die Übertragungsleitung angelegt werden.

Wie in [1], Seite 1189 empfohlen, wird die Spannung der hochohmigen Spannungsquelle, beispielsweise die Spannung einer in eine Flüssigkeit eingetauchten pH-Messkette, durch Verwendung des als Impedanzwandler dienenden Differenzverstärkers belastungsfrei erfasst. Der Differenzverstärker weist einen hohen Eingangswiderstand und einen kleinen Ausgangswiderstand auf, der die niederohmige Abgabe des gemessenen Signals an die Übertragungsleitung gewährleistet. Sofern der Differenzverstärker einen Verstärkungsfaktor von 1 aufweist, wird die an die Übertragungsleitung abgegebene Ausgangsspannung, unabhängig von der empfangsseitigen Belastung durch die Auswerteeinheit, genau auf der Höhe der gemessenen Eingangsspannung gehalten. Sofern z.B. durch die Auswerteeinheit Spannungen relativ hochohmig an die Übertragungsleitung angelegt werden, werden diese durch den Differenzverstärker durch Änderung des Ausgangsstromes unverzüglich korrigiert. Bisher wurden bei Schaltungen dieser Art Signale daher nur unidirektional über die Übertragungsleitung von der Messsonde zur Auswerteeinheit übertragen. Für die Übertragung von Signalen von der Auswerteeinheit zur Messsonde wurden hingegen andere Leitungen verwendet.

Die erfindungsgemässe Lösung erlaubt demgegenüber die bidirektionale Übertragung von Signalen über die über den ersten Widerstand mit dem niederohmigen Ausgang des Differenzverstärkers verbundene Übertragungsleitung. Durch die zusätzliche Verbindung der Übertragungsleitung mit dem invertierenden Eingang des Differenzverstärkers wird die Spannung auf der Übertragungsleitung genau auf dem Wert der mit dem Verstärkungsfaktor multiplizierten Eingangsspannung gehalten. Sofern die Übertragungsleitung und der invertierende Eingang des Differenzverstärkers miteinander kurzgeschlossen sind, entspricht die Ausgangsspannung auf der Übertragungsleitung genau der am nicht-invertierenden Eingang des Differenzverstärkers anliegenden, unbelasteten Eingangsspannung, wodurch eine präzise Messung der mittels der Messsonde zu messenden physikalischen Grössen gewährleistet ist.

Spannungen, die an die Übertragungsleitung angelegt oder Ströme die in die Übertragungsleitung eingeleitet werden, werden durch den Differenzverstärker durch Änderung des Potentials am Ausgang des Differenzverstärkers unverzüglich kompensiert, so dass resultierende Ströme, die in die Übertragungsleitung eingeleitet werden, über den ersten Widerstand und den Innenwiderstand des Differenzverstärkers abgeleitet werden. Spannungen, die an die Übertragungsleitung angelegt werden, verursachen daher proportionale Spannungsänderungen am Ausgang des Differenzverstärkers und somit am Eingang der ersten Steuereinheit. Obwohl die Spannung auf der Übertragungsleitung konstant auf der Höhe des gemessenen Signals gehalten wird, sind daher Signale von der Auswerteeinheit zur Messsonde über die Übertragungsleitung übertragbar.

Eingangs wurde beschrieben, dass z.B. bei dem in [3], EP 0 419 769 A2 beschriebenen Verfahren die Überwachung einer pH-Messsonde mittels symmetrischer bipolarer Stromimpulse durchgeführt wird, die von einer Steuereinheit abgegeben werden. Die Auswertung der resultierenden Signalverläufe erfolgt phasenkohärent in der Auswerteeinheit. Erfindungsgemäss können daher Taktsignale in der Auswerteeinheit an die Übertragungsleitung angelegt und durch die erste Steuereinheit erfasst und entsprechend getaktete bipolare Stromimpulse gebildet werden.

Dazu wird eine in der Auswerteeinheit vorgesehene, insbesondere der Abgabe von Daten oder Taktsignalen dienende Signalquelle über einen zweiten Widerstand mit der Übertragungsleitung verbunden. Mittels der von dieser Signalquelle abgegebenen Signale können die in der Messsonde vorgesehene erste und eine in der Auswerteeinheit vorgesehene zweite Steuereinheit miteinander synchronisiert werden. Möglich ist ferner, dass die Signalquelle von der zweiten Steuereinheit in Abhängigkeit der zu übertragenden Daten und/oder Taktsignale gesteuert wird. Als Ersatz der Signalquelle kann ein steuerbarer Schalter vorgesehen sein, der den mit der Übertragungsleitung verbundenen Widerstand oder einen Spannungsteiler mit einem bestimmten Potential beispielsweise mit Nullpotential verbindet.

Die von der Signalquelle an die Übertragungsleitung abgegebenen Taktsignale und/oder Daten werden in der ersten Steuereinheit regeneriert. Vorzugsweise werden die in [3] oder [4] beschriebenen bipolaren Stromimpulse bzw. Testsignale, wie symmetrische Rechtecksignale einer ersten oder einer weiteren Frequenz $f_G$, $f_R$ oder weitere Signalarten wie Sinussignale oder Dreiecksignale daraus abgeleitet und wenigstens einer Elektrode der Messsonde zugeführt. Die resultierenden Verläufe der Spannungen an der bzw. den Elektroden werden über mindestens einen Differenzverstärker und mindestens eine Übertragungsleitung zur zweiten Steuereinheit übertragen und von dieser ausgewertet.

Sofern jede Elektrode einer Messsonde einzeln überwacht werden soll, können mehrere identische Signalübertragungsvorrichtungen vorgesehen werden. Dabei genügt die Verwendung nur einer Steuereinheit in der Messsonde, da die Testsignale für die Elektroden anhand der nur über eine Übertragungsleitung übertragenen Signale erzeugt werden können. Sofern, wie in [4] beschrieben, Testsignale unterschiedlicher Frequenz $f_G$, $f_R$ für die Elektroden verwendet werden, werden Taktsignale für die erste Frequenz $f_G$ übertragen und die weiteren Frequenzen $f_R$ ... beispielsweise mittels eines Frequenzteilers daraus abgeleitet.

Da zwischen der Messsonde und der Auswerteeinheit in den heutigen Anwendungen nur wenig Daten bzw. Taktsignale übertragen werden, können in der ersten und/oder der zweiten Steuereinheit Zeitfenster vorgesehen werden, innerhalb derer Daten bzw. Taktsignale erfasst werden. Ausserhalb dieser Fenster sind die Steuereinheiten verriegelt, so dass Störeinflüsse unterdrückt werden. Die Zeitfenster können in Abhängigkeit der Polarität und/oder der Frequenz der übertragenen Signale, gegebenenfalls des verwendeten Übertragungsprotokolls, gebildet werden. Falls beispielsweise ein Impuls positiver Polarität erwartet wird, werden Impulse negativer Polarität nicht beachtet. Ferner können Datenpakete periodisch innerhalb von grösseren zeitlichen Abständen übertragen und in entsprechenden Zeitfenstern empfangen werden.

In den Steuereinheiten werden vorzugsweise Mikroprozessoren verwendet. Aufgrund der Leistungsfähigkeit von Mikroprozessoren können in der Messsonde daher vielfältige Arbeiten ausgeführt werden. Beispielsweise können zyklische Belastungen der Messsonde registriert und von der Auswerteeinheit abgefragt werden.

Als Differenzverstärker werden vorzugsweise Operationsverstärker mit Spannungs-Eingang und Spannungs-Ausgang oder Operationsverstärker mit Strom-Eingang und Spannungs-Ausgang (Transimpedanz-Verstärker) verwendet.

Die erfindungsgemässe Signalübertragungsvorrichtung und das erfindungsgemässe Verfahren sind für beliebige Sensoren oder Messsonden, wie pH-Messsonden oder Sauerstoff-Messsonden einsetzbar, wie sie in [5] "Process Measurement Solutions Catalog 2005/06", Mettler-Toledo GmbH, CH-8902 Urdorf auf Seiten 24, 25 und 66, 67 beschrieben sind.

Durch die Verwendung erfindungsgemässer Signalübertragungsvorrichtungen mit der Nutzung der konventionellen Signalleitung zur bidirektionalen Signalübertragung können bestehende Anlagen somit ohne zusätzlichen Installationsaufwand erweitert werden, um zusätzliche Funktionalitäten zu realisieren.

Nachfolgend wird die Erfindung anhand von Zeichnungen näher erläutert. Dabei zeigt:

Figur 1    eine einstufige, nach dem erfindungsgemässen Verfahren arbeitende Anlage mit einem Behältnis 8; 81, 82 und drei darin integrierten Messsonden 1a, 1b, 1c, die über Messumformer bzw. Auswerteeinheiten 3a, 3b, einen Segmentkoppler 30 und ein Bussystem mit einem Leitrechner 300 verbunden sind;

Figur 2    in schematischer Darstellung eine in eine zu messende Flüssigkeit 6 eingetauchte und mittels einer erfindungsgemässen Signalübertragungsvorrichtung 2 mit einer Auswerteeinheit 3 verbundene Messsonde 1;

Figur 3    eine erfindungsgemässe Signalübertragungsvorrichtung in prinzipieller Ausgestaltung mit einem als Impedanzwandler beschalteten Operationsverstärker OV, dessen nicht invertierender Eingang mit einer Elektrode der Messsonde 1 verbunden ist und dessen Ausgang über einen ersten Widerstand R1 mit einer Übertragungsleitung L verbunden ist, die in der Auswerteeinheit mit einer Signalquelle SQ2 verbunden ist;

Figur 4    die Signalübertragungsvorrichtung von Figur 3 mit einem als gesteuerte Signalquelle dienenden Schalter SQ2', der nach dem Schliessen Nullpotential über einen zweiten Widerstand R2 an die Übertragungsleitung L anlegt;

Figur 5    eine erfindungsgemässe Signalübertragungsvorrichtung mit zwei Signalpfaden, die der bidirektionalen Signalübertragung dienen;

Figur 6    eine erfindungsgemässe Signalübertragungsvorrichtung mit zwei Signalpfaden, von denen nur einer der bidirektionalen Signalübertragung dient.

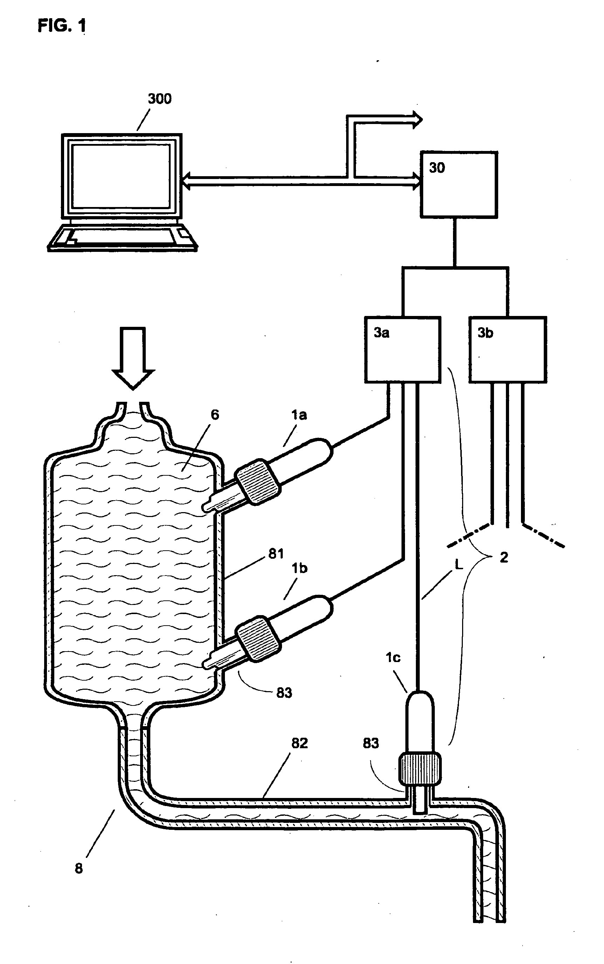

Figur 1 zeigt eine Anlage mit einem Behältnis 8 bestehend aus einem mit einem Prozessgut 6 gefüllten Behälter 81, der mittels eines Verbindungsrohrs 82 gegebenenfalls mit einer Anlageneinheit einer nächsten Prozessstufe verbunden ist. Die Eigenschaften des Prozessguts 6 werden mittels Messsonden 1a, 1b, 1c, gemessen, die über erfindungsgemässe Signalübertragungsvorrichtungen 2 mit einer Auswerteeinheit 3a bzw. 3b verbunden sind. Die u.a. als Messumformer dienenden Auswerteeinheiten 3a, 3b sind über einen Segmentkoppler 30 mit einem Leitrechner 300 verbunden.

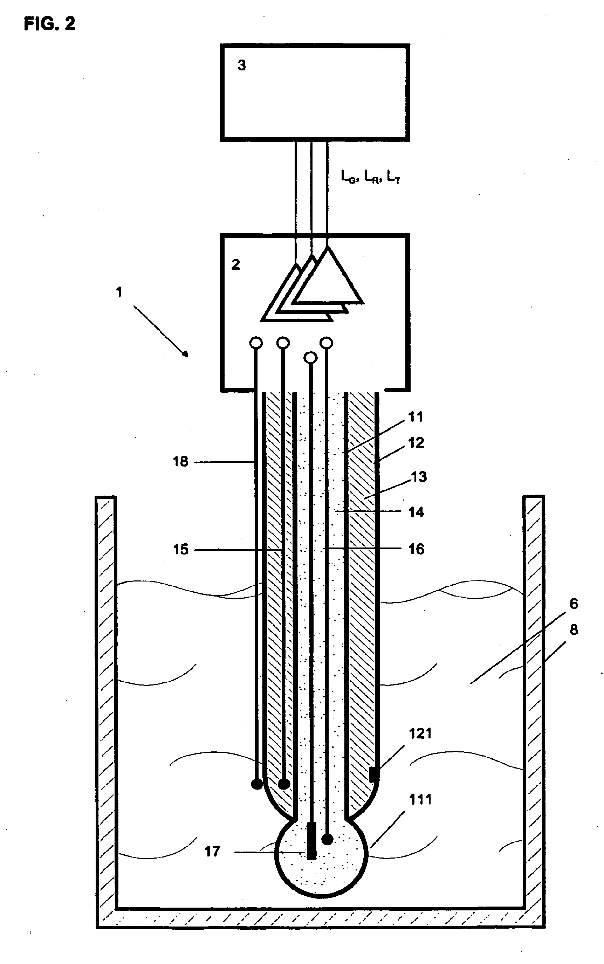

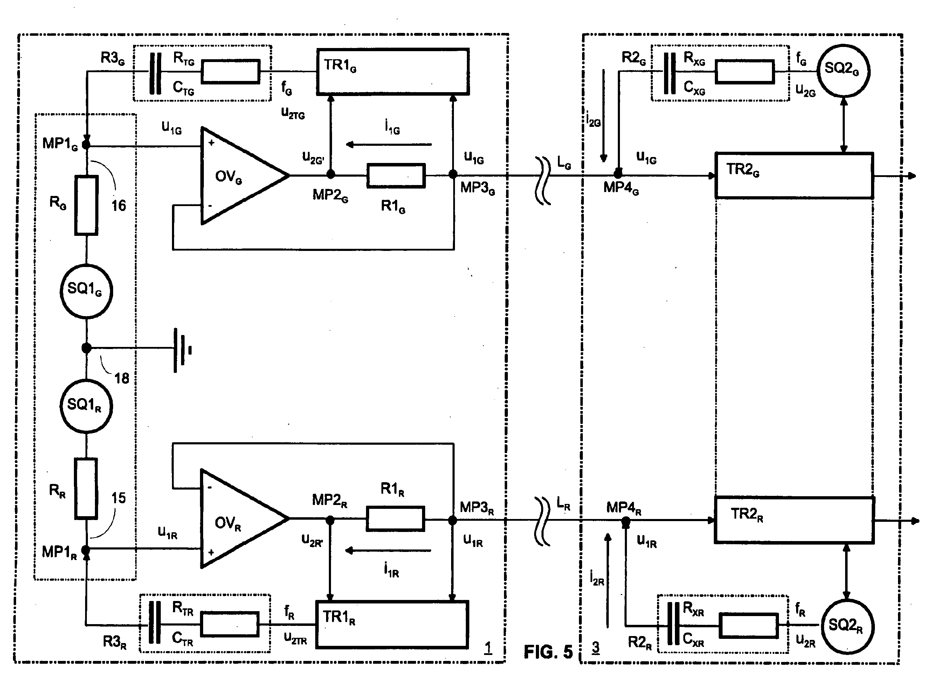

Der prinzipielle Aufbau einer pH-Messsonde, die als Einstabmesskette eine Glaselektrode 16, eine Referenzelektrode 15 und eine Hilfselektrode 18 umfasst, ist in Figur 2 schematisch gezeigt. In der Messsonde 1 sind die mit einem Ableitelement 16 versehene Glaselektrode und die mit einem Bezugselement 15 versehene Referenzelektrode konstruktiv zusammengebaut. Das Ableitelement 16 ist in einer ersten Kammer innerhalb eines Innenrohrs 11 und einer daran anschliessenden dünnwandigen Glashalbkugel bzw. Glasmembran 111 in eine Lösung mit definiertem pH-Wert bzw. einen Innenpuffer 14 getaucht, der die leitfähige Verbindung zwischen der Innenseite der Glasmembran 111 und dem Ableitelement 16 erstellt. Das Spannungspotential, das während der Messung am Ableitelement 16 entsteht (siehe Figur 5, Signalquelle $SQ1_G$), wird mit dem Spannungspotential an einem Bezugselement 15 verglichen (siehe Figur 5, Signalquelle $SQ1_R$), das innerhalb eines Aussenrohrs 12 in einen Elektrolyten bzw. einen Aussenpuffer 13 eingetaucht ist, der durch eine poröse Trennwand bzw. ein Diaphragma 121 langsam in das Messgut 6 diffundiert.

Im Innenpufferraum ist ein Temperaturmessfühler 17 angeordnet, mittels dessen die Durchführung einer automatischen Kompensation von Temperatureinflüssen und die Erfassung von Temperaturzyklen realisierbar sind.

Die erfindungsgemässe Signalübertragungsvorrichtung 2, die nachstehend näher beschrieben wird, ist in den Kopf der Messsonde 1 integriert und über Signalleitungen $L_G$, $L_R$, $L_T$ mit der Auswerteeinheit 3 verbunden.

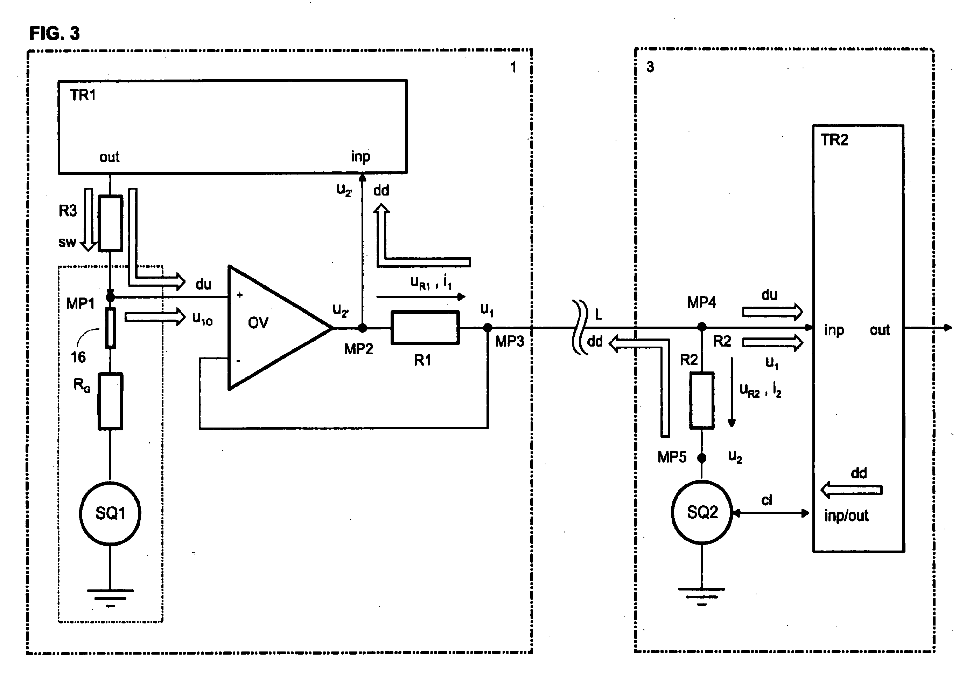

Figur 3 zeigt eine in eine Messsonde 1 integrierte erfindungsgemässe Signalübertragungsvorrichtung mit einem Differenzverstärker OV, dessen nicht-invertierendem Eingang ein von einer Glaselektrode 16 abgegebenes Eingangssignal $u_{10}$ zugeführt wird (siehe Messpunkt MP1) und von dem ein dazu korrespondierendes Ausgangssignal $u_1$ niederohmig an eine Übertragungsleitung L abgebbar ist, mittels der das Ausgangssignal $u_1$ zu einer Auswerteinheit 3 übertragen wird. Die Spannung $u_{10}$ ist das oben beschriebene Spannungspotential, das an der Glaselektrode 16 auftritt, sobald diese in das Messgut eingetaucht wird. Das Messgut 6 und die Glasmembran 111 bilden dabei die Spannungsquelle SQ1, deren Innenwiderstand hauptsächlich durch den Widerstand $R_G$ der Glasmembran 111 bestimmt wird.

Der Ausgang des Differenzverstärkers OV (siehe Messpunkt MP2), an dem die Spannung $u_2$. anliegt, ist über einen ersten Widerstand R1 mit der Übertragungsleitung L sowie mit dem invertierenden Eingang des Differenzverstärkers OV verbunden (siehe Messpunkt MP3). Da die Spannungsdifferenz an den Eingängen des Differenzverstärkers OV praktisch gleich Null ist, wird die Spannung $u_1$ am Messpunkt MP3 daher exakt der am nicht-invertierenden Eingang des Differenzverstärkers OV bzw. am Messpunkt MP1 anliegenden Eingansspannung $U_{10}$ nachgeführt. Die Spannung $u_1$ am Messpunkt MP3 wird selbst dann auf gleichem Niveau wie die Spannung $u_{10}$ am Messpunkt MP1 gehalten, wenn in der Auswerteeinheit 3 eine Spannung über einen zweiten Widerstand R2 an die Übertragungsleitung angelegt wird. Dies hat zur Folge, dass der durch den zweiten Widerstand R2 fliessende Strom $i_2$ stets gleich sein muss, wie der durch den ersten Widerstand R1 fliessende Strom $i_1$. Unter der Voraussetzung, dass die Signalquelle SQ2, die Spannung $u_2$ über den Widerstand R2 an die Übertragungsleitung L abgibt und die Leitung L nicht anderweitig belastet wird, gilt:

$$i_1 = i_2$$

$$u_{R1} / R1 = u_{R2} / R2$$

$$(u_2, - u_1) / R1 = (u_1 - u_2) / R2$$

Für die am Ausgang des Differenzverstärkers anliegende Spannung u2' gilt somit:

$$u_2, = (u_1 - u_2) R1 / R2 + u_1$$

Sofern die Widerstände R1 und R2 die gleiche Grösse aufweisen, gilt:

$$u_{2'} = (u_1 - u_2) + u_1$$

$$u_{2'} = 2\ u_1 - u_2$$

Am Ausgang des Differenzverstärkers OV bzw. am Messpunkt MP2 tritt somit die Spannung $u_1$ (bzw. $u_{10}$) auf, der die Spannungsdifferenz ($u_1 - u_2$) überlagert ist. Diese Spannung $u_{2'}$ wird dem Eingang einer in der Messsonde 1 vorgesehenen Steuereinheit TR1 zugeführt, welche in einfacher Weise ein zur Spannung $u_2$ proportionales Signal erzeugen und daraus weitere Signale ableiten kann oder, sofern Daten übertragen wurden, diese auswerten kann.

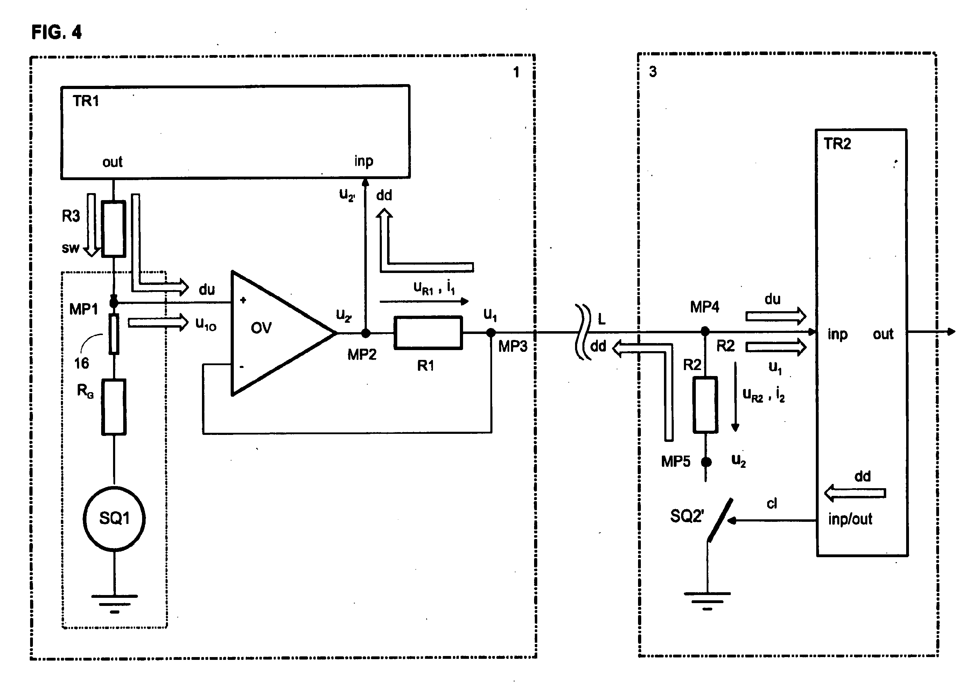

Wie in Figur 4 gezeigt, kann die Spannung $u_2$ am Messpunkt MP5 natürlich auch durch einen gesteuerten Schalter SQ2' auf ein bestimmtes Potential, beispielsweise Erdpotential gelegt werden, wonach die Spannung $u_2$, am Ausgang des Differenzverstärkers OV bzw. am Messpunkt MP2 den folgenden Wert annimmt:

$$u_{2'} = (u_1 - 0)\ R1\ /\ R2 + u_1$$

$$u_{2'} = u_1\ (R1\ /\ R2) + u_1$$

$$u_{2'} = u_1\ ((R1\ /\ R2) + 1)$$

Sofern der Schalter geöffnet wird, ist $u_1 = u_2$, weshalb gilt:

$$u_{2'} = (u_1 - u_1)\ R1\ /\ R2 + u_1$$

$$u_{2'} = u_1$$

Mit der Betätigung des Schalters SQ2' wird die Spannung u2' daher zwischen zwei Werten umgetastet, wodurch in einfacher Weise Taktimpulse oder Daten von der Auswerteeinheit 3 bzw. von der zweiten Steuereinheit TR2 zur Messsonde 1 bzw. zur ersten Steuereinheit TR1 übertragbar sind. Die Verwendung nur eines Schalters SQ2' erlaubt jedoch nur die Übertragung unipolarer Signale, so dass gegebenenfalls erforderliche bipolare Signale in der ersten Steuereinheit TR1 daraus abgeleitet werden müssen. Mittels der ersten Steuereinheit TR1 werden die vom Schalter SQ2' generierten Taktsignale und/oder Daten erfasst, gegebenenfalls regeneriert, und verarbeitet.

Vom Ausgang der ersten Steuereinheit TR1 können daher, wie in [3] und [4] beschrieben, Testsignale sw, vorzugsweise bipolare symmetrische Rechtecksignale über einen dritten, vorzugsweise komplexen Widerstand R3 zur Elektrode 16 bzw. zum Messpunkt MP1 übertragen werden. Möglich ist auch, dem Eingangssignal $u_{10}$ vorzugsweise periodisch und innerhalb kurzer Zeitfenster, Daten zu überlagern, die in der zweiten Steuereinheit TR2 vom Messsignal getrennt und ausgewertet werden. In Figur 4 ist mittels Pfeilen gezeigt, dass von der Auswerteeinheit 3 Daten dd zur Messsonde 1 und Daten du von der Messsonde 1 zur Auswerteeinheit 3 übertragen werden.

Figur 5 zeigt eine erfindungsgemässe Signalübertragungsvorrichtung mit zwei, je der bidirektionalen Signalübertragung dienenden Signalpfaden, die praktisch identisch zur Schaltungsanordnung gemäss Figur 3 aufgebaut und je mit einer Elektrode 15 bzw. 16, z.B. einer Glaselektrode und einer Referenzelektrode, der Messsonde 1 verbunden sind. Für beide Signalpfade sind erste Steuereinheiten $TR1_G$, $TR1_R$ vorgesehen, mittels derer die von der Auswerteeinheit 3 bzw. von den dortigen Steuereinheiten $TR2_G$, $TR2_R$ abgegebenen Taktsignale und/oder Daten erfasst und verarbeitet werden. Von den beiden ersten Steuereinheiten $TR1_G$, $TR1_R$ werden Testsignale $f_G$, $f_R$ unterschiedlicher Frequenz über komplexe Widerstände $R3_G$, $R3_R$ bzw. RC-Glieder $R_{TG}$, $C_{TG}$ bzw. $R_{TR}$, $C_{TR}$ an die Elektroden 15, 16 abgegeben, wie dies in [4] beschrieben ist. Auch die Signale von den in der Auswerteeinheit 3 vorgesehenen Signalquellen $SQ2_G$, $SQ2_R$

werden über komplexe Widerstände $R2_G$, $R2_R$ bzw. RC-Glieder $R_{XG}$, $C_{XG}$ bzw. $R_{XR}$, $C_{XR}$ je an die zugehörige Übertragungsleitung $L_G$, $L_R$ abgegeben.

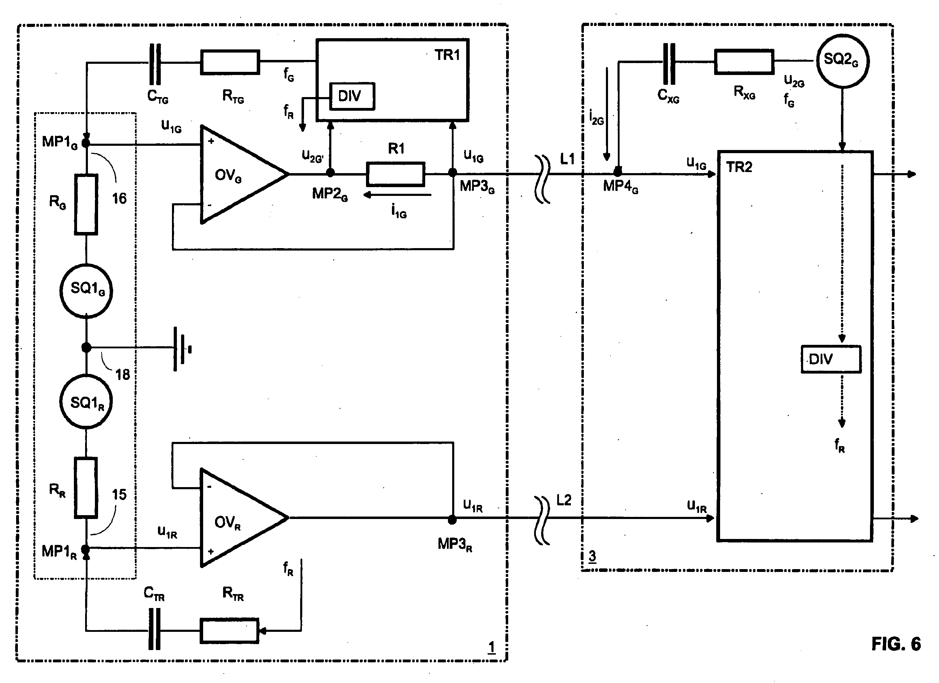

Figur 6 zeigt eine erfindungsgemässe Signalübertragungsvorrichtung mit zwei Signalpfaden, von denen nur einer der bidirektionalen Signalübertragung dient. Die Testsignale und Taktsignale für den zweiten Signalpfad werden mittels eines Frequenzteilers DIV generiert, wodurch sich der Schaltungsaufwand erheblich reduziert. Aus einer ersten Frequenz $f_G$ wird bei dieser Ausgestaltung daher eine zweite, vorzugsweise um ein ganzzahliges Vielfaches, höhere Frequenz (Divisor < 1; $f_G < f_R$) oder tiefere Frequenz (Divisor > 1; $f_G > f_R$) abgeleitet. Möglich ist natürlich auch die Realisierung der bidirektionalen Signalübertragung auf dem zweiten oder einem weiteren Signalpfad.

Die erfindungsgemässe Signalübertragungsvorrichtung, die in vorzugsweisen Ausgestaltungen beschrieben wurde, kann für die Übertragung von Daten und Signalen nach beliebig gewählten Protokollen verwendet werden. Die Verwendung von Mikroprozessoren in den ersten und zweiten Steuereinheiten TR1, TR2 erlaubt die Übertragung von Datenmengen, die auch für zukünftig realisierte Anwendungen ausreichen werden.

Zu beachten ist, dass die wesentlichen Elemente der Signalübertragungsvorrichtung in die Messsonde integrierbar sind, wobei die erfindungsgemässen Messsonden 1 anstelle konventioneller Messsonden in bestehende Anlagen eingebaut werden können.

Ferner ist zu beachten, dass die erfindungsgemässe Signalübertragungsvorrichtung für beliebige Messsonden und Sensoren einsetzbar ist, von denen ein Messstrom oder eine Messspannung abgegeben wird. Entsprechend wird einer der in [1], Seite 482 gezeigten Differenzverstärker bzw. Operationsverstärker gewählt.

Literaturverzeichnis

[1] U. Tietze, Ch. Schenk, Halbleiterschaltungstechnik, 11. Auflage, 1. Nachdruck, Springer Verlag, Berlin 1999

[2] WO 92/21962

[3] EP 0 419 769 A2

[4] EP 0 497 994 A1

[5] Process Measurement Solutions Catalog 2005/06,Mettler-Toledo GmbH, CH-8902 Urdorf (siehe http://www.mtpro.com)

**Patentansprüche**

1. Signalübertragungsvorrichtung für eine Messsonde (1), insbesondere eine elektro-chemische Messsonde, wie eine pH-Messsonde oder eine Sauerstoff-Messsonde, mit einem Differenzverstärker (OV), dessen nicht-invertierendem Eingang ein von einer Elektrode (15; 16) der Messsonde (1) abgegebenes Eingangssignal ($u_{10}$) zuführbar ist und von dem ein dazu korrespondierendes Ausgangssignal ($u_1$) niederohmig an eine Übertragungsleitung (L) abgebbar ist, mittels der das Ausgangssignal ($u_1$) zu einer Auswerteinheit (3) übertragbar ist, **dadurch gekennzeichnet, dass** die Signalübertragungsvorrichtung einen ersten Widerstand (R1), die Übertragungsleitung (L) und eine erste Steuereinheit (TR1) aufweist und dass der Ausgang des Differenzverstärkers (OV) einerseits über den ersten Widerstand (R1) mit der Übertragungsleitung (L) sowie mit dem invertierenden Eingang des Differenzverstärkers (OV) und andererseits mit dem Eingang (inp) der ersten Steuereinheit (TR1) verbunden ist, mittels der Signale, wie Taktsignale und/oder Daten, erfassbar sind, die von der Auswerteinheit (3) an die Übertragungsleitung (L) angelegt werden.

2. Signalübertragungsvorrichtung nach Anspruch 1, **dadurch gekennzeichnet, dass** der Differenzverstärker (OV) ein Operationsverstärker mit Spannungs-Eingang und Spannungs-Ausgang oder ein Transimpedanz-Verstärker mit Strom-Eingang und Spannungs-Ausgang ist.

3. Signalübertragungsvorrichtung nach Anspruch 1 oder 2, **dadurch gekennzeichnet, dass** der Differenzverstärker (OV) als Impedanzwandler beschaltet ist.

4. Signalübertragungsvorrichtung nach Anspruch 1, 2 oder 3, **dadurch gekennzeichnet, dass** eine in der Auswerteinheit (3) vorgesehene, insbesondere der Abgabe von Daten oder Taktsignalen dienende Signalquelle (SQ2) über einen zweiten Widerstand (R2) mit der Übertragungsleitung (L) verbunden ist,
und/oder dass eine in der Auswerteeinheit (3) vorgesehene Signalquelle (SQ2) über einen zweiten Widerstand (R2) mit der Übertragungsleitung (L) und über eine Steuerleitung (cl) mit einer in der Auswerteeinheit (3) vorgesehenen zweiten Steuereinheit (TR2), die der Auswertung der von der Messsonde (1) übertragenen Signale und/oder Daten dient, verbunden ist, der von der Signalquelle (SQ2) Taktsignale zuführbar sind oder die die zu übertragenden Daten und/oder Taktsignale an die Signalquelle (SQ2) überträgt.

5. Signalübertragungsvorrichtung nach Anspruch 4, **dadurch gekennzeichnet, dass** die von der Signalquelle (SQ2) an die Übertragungsleitung (L) abgegebenen Taktsignale und/oder Daten in der ersten Steuereinheit (TR1) regenerierbar und daraus abgeleitete Testsignale, wie Rechtecksignale einer ersten oder einer weiteren Frequenz ($f_G$, $f_R$), wenigstens einer Elektrode (15; 16) der Messsonde (1) zuführbar sind, wonach die resultierenden Verläufe der Spannungen an der Elektrode (15; 16) über mindestens einen Differenzverstärker (OV; $OV_G$, $OV_R$) und mindestens eine Übertragungsleitung (L; $L_G$, $L_R$), zur zweiten Steuereinheit (TR2) übertragbar und von dieser auswertbar sind.

6. Signalübertragungsvorrichtung nach Anspruch 5, **dadurch gekennzeichnet, dass** die von den Elektroden (15; 16) abgegebenen Signale, je über einen als Impedanzwandler beschalteten Differenzverstärker ($OV_G$, $OV_R$) und eine Übertragungsleitung ($L_G$, $L_R$) zur Auswerteeinheit (3) übertragbar sind, wobei Taktsignale und/oder Daten vorzugsweise nur über eine der Übertragungsleitungen ($L_G$, $L_R$) übertragbar und vorzugsweise nur von einer ersten Steuereinheit (TR1) regenerierbar sind, welche vorzugsweise einen Frequenzteiler (DIV) aufweist, mittels dessen Testsignale ($f_G$, $f_R$, ...)für die vorhandenen Elektroden (16) generierbar sind.

7. Signalübertragungsvorrichtung nach Anspruch 5, **dadurch gekennzeichnet, dass** der zweite Widerstand (R2), der die Signalquelle (SQ2) mit der Leitung (L; LG, LR) verbindet und ein dritter Widerstand (R3), der die wenigstens eine erste Steuereinheit (TR1) mit der zugehörigen Elektrode (15; 16) verbindet, komplex und vorzugsweise durch RC-Glieder mit einem Widerstand ($R_{T1}$; $R_{X1}$) und einem Kondensator ($R_{T1}$; $R_{X1}$) gebildet sind.

8. Verfahren zur Übertragung von Signalen zwischen einer Messsonde (1), insbesondere einer pH-Messsonde oder einer Sauerstoff-Messsonde, und einer Auswerteeinheit (3), mit einem Differenzverstärker (OV), dessen nicht-invertierendem Eingang ein von einer Elektrode (15; 16) der Messsonde (1) abgegebenes Eingangssignal ($u_{10}$) zugeführt wird und von dem ein dazu korrespondierendes Ausgangssignal ($u_1$) niederohmig an eine Übertragungsleitung (L) abgegeben wird, mittels der das Ausgangssignal ($u_1$) zu einer Auswerteinheit (3) übertragen wird, **dadurch gekennzeichnet, dass** der Ausgang des Differenzverstärkers (OV) einerseits über einen ersten Widerstand (R1) mit der Übertragungsleitung (L) sowie mit dem invertierenden Eingang des Differenzverstärkers (OV) und andererseits mit dem Eingang (inp) einer ersten Steuereinheit (TR1) verbunden ist, mittels der Signale, wie Taktsignale und/oder Daten, erfasst werden, die von der Auswerteeinheit (3) an die Übertragungsleitung (L) angelegt werden.

9. Verfahren nach Anspruch 8, **dadurch gekennzeichnet, dass** eine in der Auswerteeinheit (3) vorgesehene Signalquelle (SQ2) Taktsignale und/oder Daten über einen zweiten Widerstand (R2) an die Übertragungsleitung (L) überträgt, die gegebenenfalls von einer zweiten Steuereinheit (TR2) zugeführt werden und/oder dass die in der Auswerteeinheit (3) vorgesehene Signalquelle (SQ2) Taktsignale über einen zweiten Widerstand (R2) an die Übertragungsleitung (L) und über eine Steuerleitung an die zweite Steuereinheit (TR2) überträgt.

10. Verfahren nach Anspruch 8 oder 9, **dadurch gekennzeichnet, dass** die über die Übertragungsleitung (L) übertragenen Taktsignale und/oder Daten in der ersten Steuereinheit (TR1) regeneriert und vorzugsweise Testsignale, wie Rechtecksignale einer ersten oder einer weiteren Frequenz ($f_G$, $f_R$), gegebenenfalls durch Frequenzteilung daraus abgeleitet und wenigstens einer Elektrode (15; 16) der Messsonde (1) zugeführt werden, wonach die resultierenden Verläufe der Spannungen an der Elektrode (15; 16) über mindestens einen Differenzverstärker (OV; $OV_G$, $OV_R$) und mindestens eine Übertragungsleitung (L; $L_G$, $L_R$), zur zweiten Steuereinheit (TR2) übertragen und von dieser ausgewertet werden.

11. Verfahren nach Anspruch 8, 9 oder 10, **dadurch gekennzeichnet, dass** in der ersten und/oder der zweiten Steuereinheit (TR1, TR2) Zeitfenster vorzugsweise in Abhängigkeit der Polarität und/oder der Frequenz der übertragenen Signale, gegebenenfalls des verwendeten Übertragungsprotokolls, gebildet werden, innerhalb derer die Daten und/oder Taktsignale erwartet werden.

12. Messsonde (1), insbesondere pH-Messsonde oder Sauerstoff-Messsonde, mit einer Signalübertragungsvorrichtung nach Anspruch 1, 2, 3 oder 6.

**Claims**

1. Signal transmission device for a measuring probe (1), in particular an electrochemical measuring probe such as a pH measuring probe or an oxygen measuring probe, comprising a differential amplifier (OV), at whose non-inverting input an input signal ($u_{10}$) can be presented which is generated by an electrode (15; 16) of the measuring probe (1), and from which a corresponding low-impedance output signal ($u_1$) can be delivered to a transmission line (L) by means of which the output signal ($u_1$) can be transmitted to a signal-processing unit (3), **characterized in that** the signal transmission device comprises a first resistor (R1), the transmission line (L) and a first control unit (TR1) and that the output of the differential amplifier (OV) is connected on the one hand by way of the first resistor (R1) to the transmission line (L) and to the inverting input of the differential amplifier (OV) and on the other hand to the input (inp) of the first control unit (TR1) that is operable to register signals such as clock signals and/or data which are applied to the transmission line (L) by the signal-processing unit (3).

2. Signal processing device according to claim 1, **characterized in that** the differential amplifier (OV) is an operational amplifier with voltage input and voltage output or a trans-impedance amplifier with current input and voltage output.

3. Signal-processing device according to claim 1 or 2, **characterized in that** the differential amplifier (OV) is arranged to operate as an impedance converter.

4. Signal-processing device according to claim 1, 2 or 3, **characterized in that** a signal source (SQ2) which is present in the signal-processing unit (3) and serves in particular to deliver data or clock signals is connected by way of a second resistor (R2) to the transmission line (L),
and/or that a signal source (SQ2) which is present in the signal-processing unit (3) is connected by way of a second resistor (R2) to the transmission line (L) and by way of a control line (c1) to a second control unit (TR2) which is likewise present in the signal-processing unit (3), serves for the processing of the signals and/or data transmitted from the measuring probe (1), and can be supplied with clock signals from the signal source (SQ2) or transmits data and/or clock signals to the signal source (SQ2) as required.

5. Signal transmission device according to claim 4, **characterized in that** the clock signals and/or data delivered by the signal source (SQ2) into the transmission line (L) can be regenerated in the first control unit (TR1) and test signals derived from them, such as square-wave signals of a first frequency or a further frequency ($f_G$, $f_R$) can be sent to at least one electrode (15; 16) of the measuring probe (1), whereupon the resulting profiles of the voltages occurring at the electrode (15; 16) can be transmitted by way of at least one differential amplifier (OV; $OV_G$, $OV_R$) and at least one transmission line (L; $L_G$, $L_R$) to the second control unit (TR2) where they can be processed.

6. Signal transmission device according to claim 5, **characterized in that** the signals delivered by the electrodes (15; 16) can be transmitted to the signal-processing unit (3) by way of respective associated differential amplifiers ($OV_G$, $OV_R$) arranged as impedance converters and by way of respective associated transmission lines ($L_G$, $L_R$), wherein clock signals and/or data can be transmitted preferably through only one of the transmission lines ($L_G$, $L_R$) and can be regenerated preferably only by a first control unit (TR1) which preferably comprises a frequency divider (DIV) by means of which test signals (fG, fR, ...) for the electrodes (16) that are present can be regenerated.

7. Signal transmission device according to claim 5, **characterized in that** the second resistor (R2) which connects the signal source (SQ2) to the transmission line (L; LG, LR) and a third resistor (R3) which connects at least one first control unit (TR1) to the associated electrode (15; 16) are formed as complex impedance elements, preferably as RC elements with a resistor ($R_{T1}$; $R_{X1}$) and a capacitor ($C_{T1}$; $C_{X1}$).

8. Method for the transmission of signals between a measuring probe (1), in particular a pH measuring probe or an oxygen measuring probe, and a signal-processing unit (3) comprising a differential amplifier (OV) which receives at its non-inverting input an input signal ($u_{10}$) generated by an electrode (15; 16) of the measuring probe (1) and which delivers a corresponding low-impedance output signal ($u_1$) to a transmission line (L) which, in turn transmits the output signal ($u_1$) to a signal-processing unit (3), **characterized in that** the output of the differential amplifier (OV) is connected on the one hand by way of a first resistor (R1) to the transmission line (L) and to the inverting input of the differential amplifier (OV) and on the other hand to the input (inp) of a first control unit (TR1) that is operable to register signals such as clock signals and/or data which are applied to the transmission line (L) by the signal-processing unit (3).

9. Method according to claim 8, **characterized in that** a signal source (SQ2) which is present in the signal-processing unit (3) transmits by way of a second resistor (R2) data or clock signals to the transmission line (L) which may be supplied by a second control unit (TR2), and/or that the signal source (SQ2) which is present in the signal-processing unit (3) sends clock signals by way of a second resistor (R2) to the transmission line (L) and by way of a control line to the second control unit (TR2).

10. Method according to claim 8 or 9, **characterized in that** the clock signals and/or data transmitted through the transmission line (L) are regenerated in the first control unit (TR1) and that test signals are preferably derived from them, such as square-wave signals of a first or a further frequency ($f_G$, $f_R$) which may be obtained by subdividing the frequency, and are sent to at least one electrode (15; 16) of the measuring probe (1), whereupon the resultant profiles of the voltages at the electrode (15; 16) are transmitted to the second control unit (TR2) by way of at least one differential amplifier (OV; $OV_G$, $OV_R$) and at least one transmission line (L; $L_G$, $L_R$) to the second control unit (TR2) where they are evaluated.

11. Method according to claim 8, 9 or 10, **characterized in that** time windows in which the data and/or clock signals are expected to arrive are formed in the first and/or the second control unit (TR1, TR2) preferably dependent on the polarity and/or the frequency of the signals being transmitted, and possibly dependent on the transmission protocol being used.

12. Measuring probe (1), in particular a pH measuring probe or an oxygen measuring probe, with a signal transmission device according to claim 1, 2, 3 or 6.

## Revendications

1. Dispositif de transmission de signaux pour une sonde de mesure (1), en particulier une sonde de mesure électrochimique, telle qu'une sonde de mesure de pH ou une sonde de mesure d'oxygène, comprenant un amplificateur différentiel (OV), à l'entrée non inverseuse duquel un signal d'entrée ($u_{10}$) délivré par une électrode (15 ; 16) de la sonde de mesure (1) peut être amené et par lequel un signal de sortie ($u_1$) correspondant à ce signal peut être délivré avec une faible impédance à une ligne de transmission (L), au moyen de laquelle le signal de sortie ($u_1$) peut être transmis à une unité d'analyse (3), **caractérisé en ce que** le dispositif de transmission de signal présente une première résistance (R1), la ligne de transmission (L) et une première unité de commande (TR1) et **en ce que** la sortie de l'amplificateur différentiel (OV) est reliée d'une part par la première résistance (R1) à la ligne de transmission (L) ainsi qu'à l'entrée inverseuse de l'amplificateur différentiel (OV) et d'autre part à l'entrée (inp) de la première unité de commande (TR1), au moyen de laquelle des signaux, tels que des signaux de signalisation et/ou des données, peuvent être enregistrés, lesquels sont appliqués par l'unité d'analyse (3) sur la ligne de transmission (L).

2. Dispositif de transmission de signaux selon la revendication 1, **caractérisé en ce que** l'amplificateur différentiel (OV) est un amplificateur opérationnel avec entrée de tension et sortie de tension ou un amplificateur à transimpédance avec entrée de courant et sortie de tension.

3. Dispositif de transmission de signaux selon la revendication 1 ou 2, **caractérisé en ce que** l'amplificateur différentiel (OV) est câblé comme un transformateur d'adaptation d'impédance.

4. Dispositif de transmission de signaux selon la revendication 1, 2 ou 3, **caractérisé en ce qu'**une source de signal (SQ2) prévue dans l'unité d'analyse (3), servant en particulier à la délivrance de données ou de signaux de synchronisation est reliée par une seconde résistance (R2) à la ligne de transmission (L), et/ou **en ce qu'**une source de signal (SQ2) prévue dans l'unité d'analyse (3) est reliée par une seconde résistance (R2) à la ligne de transmission (L) et par une ligne de commande (c1) à une seconde unité de commande (TR2) prévue dans l'unité d'analyse (3), laquelle sert à l'analyse des signaux transmis par la sonde de mesure (1) et/ou de données, unité à laquelle des signaux de synchronisation peuvent être amenés à partir de la source de signal (SQ2) ou qui transmet les données et/ou signaux de synchronisation à transmettre à la source de signal (SQ2).

5. Dispositif de transmission de signaux selon la revendication 4, **caractérisé en ce que** les signaux de synchronisation et/ou données délivrés par la source de signal (SQ2) sur la ligne de transmission (L) peuvent être régénérés dans la première unité de commande (TR1) et des signaux de test déduits des premiers signaux, tels que des signaux rectangulaires d'une première ou d'une seconde fréquence ($f_G$, $f_R$) peuvent être amenés à au moins une électrode (15 ; 16) de la sonde de mesure (1), après quoi les courbes résultantes des tensions sur l'électrode (15 ; 16) peuvent être transmises au moyen d'au moins un amplificateur différentiel (OV ; $OV_G$, $OV_R$) et d' au moins une ligne de transmission (L ; $L_G$, $L_R$) à la seconde unité de commande (TR2) et peuvent être analysées par celle-ci.

**6.** Dispositif de transmission de signaux selon la revendication 5, **caractérisé en ce que** les signaux délivrés par les électrodes (15 ; 16) peuvent être transmis respectivement par un amplificateur différentiel ($OV_G$, $OV_R$) câblé comme transformateur d'adaptation d'impédance et par une ligne de transmission ($L_G$, $L_R$) à l'unité d'analyse (3), des signaux de synchronisation et/ou de données pouvant être transmis de préférence uniquement par l'une des lignes de transmission ($L_G$, $L_R$) et pouvant être régénérés de préférence seulement par une première unité de commande (TR1), laquelle présente de préférence un diviseur de fréquence (DIV), au moyen duquel des signaux de test ($f_G$, $f_R$) peuvent être générés pour les présentes électrodes (16).

**7.** Dispositif de transmission de signaux selon la revendication 5, **caractérisé en ce que** la seconde résistance (R2), qui relie la source de signal (SQ2) à la ligne (L ; $L_G$, $L_R$), et une troisième résistance (R3), qui relie la au moins une première unité de commande (TR1) à l'électrode (15 ; 16) spécifique, sont formées de façon complexe et de préférence par des circuits RC à une résistance ($R_{T1}$ ; $R_{X1}$) et un condensateur ($R_{T1}$ ; $R_{X1}$) .

**8.** Procédure pour la transmission de signaux entre une sonde de mesure (1), en particulier une sonde de mesure de pH ou une sonde de mesure à oxygène, et une unité d'analyse (3), comprenant un amplificateur différentiel (OV), à l'entrée non inverseuse duquel un signal d'entrée ($u_{10}$) délivré par une électrode (15 ; 16) de la sonde de mesure (1) est amené et par lequel un signal de sortie ($u_1$) correspondant au premier est délivré avec une basse impédance à une ligne de transmission (L), au moyen de laquelle le signal de sortie ($u_1$) est transmis à une unité d'analyse (3), **caractérisé en ce que** la sortie de l'amplificateur différentiel (OV) est reliée d'une part par une première résistance (R1) à la ligne de transmission (L) ainsi qu'à l'entrée inverseuse de l'amplificateur différentiel (OV) et d'autre part à l'entrée (inp) d'une première unité de commande (TR1), au moyen de laquelle des signaux, tels que des signaux de synchronisation et/ou des données, sont enregistrés, lesquels sont appliqués par l'unité d'analyse (3) sur la ligne de transmission (L).

**9.** Procédé selon la revendication 8, **caractérisé en ce qu'**une source de signal (SQ2) prévue dans l'unité d'analyse (3) transmet des signaux de synchronisation et/ou des données au moyen d'une seconde résistance (R2) à la ligne de transmission (L), qui sont amenés éventuellement par une seconde unité de commande (TR2) et/ou **en ce que** la source de signal (SQ2) prévue dans l'unité d'analyse (3) transmet des signaux de synchronisation par une seconde résistance (R2) à la ligne de transmission (L) et par une ligne de commande à la seconde unité de commande (TR2).

**10.** Procédé selon la revendication 8 ou 9, **caractérisé en ce que** les signaux de rythme et/ou données transmis par la ligne de transmission (L) sont régénérés dans la première unité de commande (TR1) et de préférence des signaux de test, tels que des signaux rectangulaires d'une première ou d'une seconde fréquence ($f_G$, $f_R$) sont éventuellement déduits à partir de cela par division de fréquence et sont amenés à au moins une électrode (15 ; 16) de la sonde de mesure (1), après quoi les tracés résultants des tensions sur l'électrode (15 ; 16) sont transmis par au moins un amplificateur différentiel (OV ; $OV_G$, $OV_R$) et au moins une ligne de transmission (L ; $L_G$, $L_R$), à la seconde unité de commande (TR2) et sont analysés par celle-ci.

**11.** Procédé selon la revendication 8, 9 ou 10, **caractérisé en ce que**, dans la première et/ou la seconde unité de commande (TR1, TR2), des fenêtres temporelles sont formées de préférence en fonction de la polarité et/ou de la fréquence des signaux transmis, éventuellement du protocole de transmission utilisé, à l'intérieur desquels les données et/ou signaux de synchronisation sont attendus.

**12.** Sonde de mesure (1), en particulier sonde de mesure de pH ou sonde de mesure d'oxygène, comprenant un dispositif de transmission de signaux selon la revendication 1, 2, 3 ou 6.

**FIG. 1**

**FIG. 2**

FIG. 3

**FIG. 4**

EP 1 744 153 B1

FIG. 5

**FIG. 6**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9221962 A
- EP 0419769 A2
- EP 0497994 A1

**In der Beschreibung aufgeführte Nicht-Patentliteratur**

- **U. TIETZE ; CH. SCHENK.** Halbleiterschaltungstechnik, 11. Springer Verlag, 1999, 1189, 1190
- **U. TIETZE ; CH. SCHENK.** Halbleiterschaltungstechnik. Springer Verlag, 1999
- Process Measurement Solutions Catalog. Mettler-Toledo GmbH, 2005